Europäisches Patentamt

(19) European Patent Office

Office européen des brevets

(11) **EP 0 797 490 B1**

(12) **EUROPEAN PATENT SPECIFICATION**

(45) Date of publication and mention
of the grant of the patent:
**21.04.1999 Bulletin 1999/16**

(21) Application number: **95920310.0**

(22) Date of filing: **13.06.1995**

(51) Int. Cl.$^6$: **B23K 9/095**

(86) International application number:
**PCT/NL95/00208**

(87) International publication number:
**WO 95/34400 (21.12.1995 Gazette 1995/54)**

(54) **WELDING METHOD, AND WELDING DEVICE FOR USE THEREIN, AND METHOD OF ANALYSIS FOR EVALUATING WELDS**

SCHWEISSVERFAHREN UND -VORRICHTUNG, VERFAHREN ZUM KONTROLLIEREN VON SCHWEISSUNGEN

PROCEDE DE SOUDURE, DISPOSITIF DE SOUDURE CORRESPONDANT, ET PROCEDE D'ANALYSE POUR CONTROLE DES SOUDURES

(84) Designated Contracting States:
**BE DE FR GB NL PT**

(30) Priority: **13.06.1994 NL 9400958**

(43) Date of publication of application:
**01.10.1997 Bulletin 1997/40**

(73) Proprietor:
**Technische Universiteit Delft
2628 BL Delft (NL)**

(72) Inventors:
 • **AENDENROOMER, Antonius, Johannes, Rosa
NL-2628 AC Delft (NL)**
 • **DEN OUDEN, Gerrit
NL-3722 AL Bilthoven (NL)**

 • **XIAO, You, Hong
NL-2624 ZC Delft (NL)**
 • **BRABANDER, Wilhelmus, Antonius, Johannus
NL-2624 ZV Delft (NL)**

(74) Representative:
**Smulders, Theodorus A.H.J., Ir. et al
Vereenigde Octrooibureaux
Nieuwe Parklaan 97
2587 BN 's-Gravenhage (NL)**

(56) References cited:
**EP-A- 0 333 195      DE-A- 2 813 260
GB-A- 2 210 691      US-A- 5 306 893**

 • **WELDING JOURNAL, vol. 72, no. 8, 1993 pages 428S-434S, XIAO ET AL. 'Weld pool oscillation during gta welding of mild steel'**

## Description

The present invention relates to welding methods and devices in which a workpiece is partly melted by means of an electric arc.

Such a method is well-known in practice as a method of construction and is used, inter alia, to interconnect two or more metal workpieces. The workpieces are placed with the sides to be connected in each other's vicinity and are partly melted along these sides by means of an electric arc. The partly melted parts flow together to form a single weld pool; if required, material can be added to the weld pool. After solidification of the weld pool the mutual attachment is a fact. By moving the welding arc along the above sides, with the weld pool moving along with this arc, a welded seam is formed.

An important parameter which highly determines the quality of the welded joint formed is the degree of welding through. As used herein, the term "welding through", hereinafter also designated as "penetration", refers to the relative depth over which the welded seam, i.e. the molten and resolidified material, extends into the workpiece. By way of illustrative example, it will be clear that when a butt welded seam is made in plate-shaped workpieces the strength of the weld is insufficient if the welded seam does not fully extend through the plates, and that the seam left between the plates forms a weak point in the construction formed. On the other hand, when during welding the weld pool formed extends too deeply into the plates, it may happen in extreme cases that the molten material cannot be retained by the plates.

In the ideal case the welded seam extends exactly over the full depth of the plates.

A problem arising here is that it is difficult to evaluate from the side of the welding arc how far the weld pool extends through the material. In the case of manual welding the welder can visually observe the weld pool and derive from the observation whether the welding through is sufficient or not, and in case of insufficient or excessive welding through he can immediately take corrective measures. This, however, requires a special amount of experience and skill, and errors are not impossible. In case of automatic welding, such a visual observation and the possibility based thereon to take corrective measures are absent.

Especially in situations in which the quality of the welded joint formed must satisfy high standards, it is therefore necessary to subsequently test the welded seam for welding through. If it is possible to approach the back of the weld, such an inspection can be carried out rather easily by visual observation of this back, if required by means of a camera. This is not always possible, however; especially during welding of pipes such a method of inspection is hardly, if at all, possible.

In order to enable the welding quality to be examined in such cases, methods of X-raying the welded seam were developed in the past. These methods, however, are very expensive and time-consuming. Often it is not even allowed to make a next weld before the preceding weld has been accepted; such a waiting time means a loss of production capacity.

It is therefore an object of the invention to provide methods and devices which deal with the above drawbacks by using the known per se fact that the natural frequency of oscillation of the weld pool reflects the degree of welding through. This known per se fact is described in Welding Journal, vol. 72, no. 8, 1993, p. 428-s/434-s; Xiao et al. "Weld pool oscillation during GTA welding of mild steel" which represents the closest prior art. It generally applies that the natural frequency of oscillation of the weld pool is relatively high when the penetration is incomplete, and that this frequency is relatively low when the penetration is complete. It has been found that under normal conditions of practise the above frequency is above 100 Hz in case of incomplete penetration and is below 100 Hz in case of complete penetration.

The above publication describes a welding process and a device as defined in the opening paragraph in which welding is applied at a continuous current strength. The weld pool is brought into oscillation by modulating excitation pulses on the continuous welding current. Subsequently, the frequency of oscillation of the weld pool is measured and processed, which enables detection of the transition from partial to complete welding through.

The purpose of the invention is to improve the known welding method and device, avoiding thereby the modulation of excitation pulses on the welding current.

Therefore, according to a first aspect of the invention, the method as described in the opening paragraph, is characterized by performing pulsation welding, measuring a signal representing the arc voltage during welding, storing the measured signal in a memory or recording it on a carrier and checking the weld by analysing said signal. According to an important aspect of the invention pulsation welding is applied. As used in this art, this expression means that the welding current has a square waveform, which is characterized by two quasi stationary DC levels. When the welding current is equal to the first relatively high DC level (referred to hereinafter as pulsed current), the heat input is so high that material is melting and the wild pool is growing; when the welding current is equal to the second relatively low DC level (referred to hereinafter as base current), the heat input is so low that material is solidifying and the weld pool is shrinking. This is a known per se welding process for plate material.

In the first place, the invention is based on the insight that a good welded seam is provided when during the pulsed current phase complete penetration is attained, while during the base current phase the weld pool shrinks to only partial penetration, and that a pulsation welding process to achieve this is characterized by a relatively low frequency of oscillation during the pulsed current phase and a relatively high frequency of oscillation during the base current phase.

In a second place, the invention is based on the insight that during pulsation welding the weld pool is already brought into oscillation automatically by means of the stepped transitions between the two quasi stationary DC levels, and that it is not necessary then to modulate excitation pulses on the welding current.

The invention provides a welding method which enables the quality of the welded seam formed to be rapidly determined afterwards in a relatively easy manner. For this purpose, pulsation welding is performed, and during welding a signal representing the arc voltage is measured and stored in a memory or recorded on a carrier. After welding, the signals stored are analyzed to determine whether the degree of welding through was sufficient during the welding process. Here the criterion applies that the frequency of oscillation during the pulsed current phase is sufficiently different from the frequency of oscillation during the base current phase. Since such an analysis can be carried out by a computer, the result can be available very rapidly without the necessity of complicated and expensive equipment of analysis.

It is further an important advantage of this method of analysis that the measuring signal can be simply taken from the power source of the welding process so that a standard welding torch can be used without it being necessary for the welded workpiece to be accessible for inspections, such as x-raying.

According to a second aspect of the invention, the method as described in the opening paragraph, is characterized by performing pulsation welding, measuring a signal representing the arc voltage during welding, checking welding by analysing said signal and generating, on the basis of the form of the frequency spectrum of said signal, a signal indicative of the degree of welding through.

The invention further relates to a method of analysing welds made by means of a pulsation welding process as indicated above. In this method a measuring signal representing the arc voltage occurring during welding is stored in a memory or recorded on a carrier. Thereafter, the recorded signal is read out of this memory or carrier and analysed with respect to the occurrence of two peaks in the frequency spectrum.

In a further aspect of the invention, a method which enables automatic production of welded seams of good quality is provided. Based on the above insights, pulsation welding is performed, and during welding a signal representing the arc voltage is measured. In this embodiment said signal is analyzed in real time with respect to the occurrence of two peaks in the frequency spectrum. The welding process is controlled on the basis of the result of this analysis.

It is observed that within the scope of the present invention the term "a signal representing the arc voltage" also comprises, e.g., the arc current.

In further aspects of the invention, welding devices according to claims 11 and 15 are provided.

Further embodiments and advantages of the present invention will become apparent from the following description of preferred embodiments of the method and device according to the invention, in which reference will be made to the accompanying drawing in which:

Fig. 1 is a diagrammatic representation of a device for producing and analyzing a weld;

Fig. 2A, 2B and 2C are diagrammatic cross-sectional views of a weld;

Figs. 3A and 3B show the oscillation modes of the weld pools illustrated in Figs. 2A and 2B;

Figs. 4A and 4B show the frequency spectra belonging to the oscillation modes shown in Figs. 3A and 3B;

Figs. 5A and 5B show the voltage and current curves as a function of the time during the implementation of a method according to the invention;

Figs. 6A-6C show different stages of a weld pool during a cycle of a method according to the invention;

Fig. 7 shows a frequency spectrum of the oscillation of a weld pool during the implementation of a method according to the invention;

Fig. 8A shows the voltage and current curves as a function of the time in case of insufficient welding through;

Fig. 8B shows a frequency spectrum of the oscillation of a weld pool during a welding process shown in Fig. 8A;

Fig. 8C shows the voltage and current curves as a function of the time in case of excessive welding through;

Fig. 8D shows a frequency spectrum of the oscillation of a weld pool during a welding process shown in Fig. 8C;

Fig. 9 is a diagrammatic representation of an embodiment of a device according to the invention, intended for analyzing welds produced;

Fig. 10 is a diagrammatic representation of an embodiment of a device according to the invention, intended for monitoring a welding process; and

Fig. 11 is a diagrammatic representation of an embodiment of a device according to the invention, intended for the automatic implementation of a welding process according to the invention.

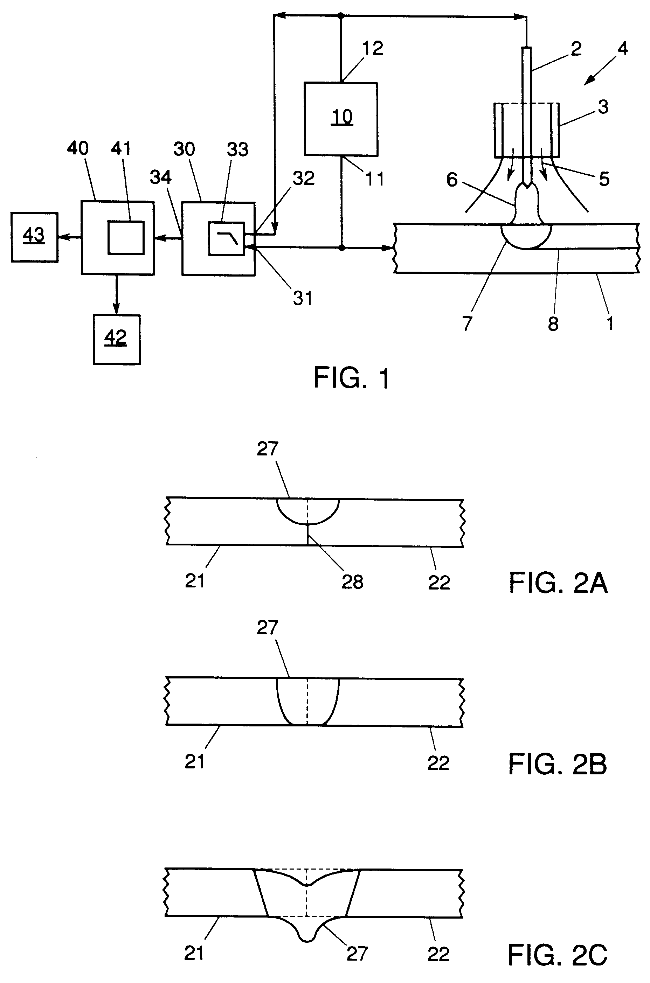

Since a pulsation welding process is commonly known per se, this process will be explained only in brief, with reference to Fig. 1. Fig. 1 diagrammatically shows a plate-shaped workpiece 1, e.g. of steel, which is electrically connected to a first output terminal 11 of a power source 10. A welding electrode 2 is held in the vicinity of the plate 1, e.g. manually or in a welding robot. The welding electrode 2 is electrically connected to a second output terminal 12 of the power source 10. In general, the second output terminal 12 is negative with respect to the first output terminal 11. The welding electrode 2 is a non-fusing electrode, e.g. of tungsten, the end of which is suitably designed and is mounted in a nozzle 3 of a welding torch 4 through which a protective gas 5 of a suitable composition, e.g. argon and/or helium, flows. In the protective gas 5 a welding arc 6 burns between the welding electrode 2 and the plate 1, which introduces so much heat into the plate 1 that a part of the plate material is melted and forms a weld pool 7.

Since the nature and the structure of the power source 10 and the welding torch 4 are no subject of the present invention and those skilled in the art do not need knowledge thereof for a proper understanding of the present invention, while for the application of the present invention use may be made of commonly known structures for that power source and welding torch, these will not be described in more detail.

When the welding electrode 2 and the plate 1 are moved relative to each other, the weld pool 7 will move with the welding electrode 2 along the plate 1, with a trace (bead) of molten and resolidified plate material 8 being left. As will be clear to those skilled in the art, additional material may be added to the weld pool by holding an end of a bar of additional material in the vicinity of the arc, but, for simplicity's sake, this is not shown in Fig. 1.

Figs. 2A-2C diagrammatically show two plates 21 and 22 to be connected together, positioned with their sides against each other. By means of a welding electrode, not shown for simplicity's sake, a weld pool 27 is formed which extends in both plates 21 and 22. When the welding electrode is moved along the above sides, i.e. at right angles to the plane of the paper, the welding bead then formed will connect the two plates 21 and 22 together. In the figures the original contours of the plates are shown in dotted lines.

Fig. 2A shows a situation in which the heat supplied is insufficient to melt the two plates 21 and 22 sufficiently so that the depth d of the weld pool 27 is less than the thickness H of the two plates 21 and 22. Within the scope of the present invention, this situation is designated by the term "partial penetration". Such a weld does not provide optimum strength properties: in the first place, because the weld is thinner than the surrounding plate material and therefore intrinsically weaker than the plates, in the second place, because the slit 28 left underneath the weld forms a notch between the plates in the welded construction, which notch, in case of alternating load, may easily lead to a crack.

Fig. 2B shows a situation in which the heat supplied is just sufficient to melt the two plates 21 and 22 sufficiently so that the depth d of the weld pool 27 is just as large as the thickness H of the two plates 21 and 22. Within the scope of the present invention, this situation, the most favorable situation, is designated by the term "complete penetration". In practice, d may slightly exceed H.

Fig. 2C shows a situation in which the heat supplied substantially exceeds the amount of heat required for complete penetration. Consequently, the weld pool 27 is so large that it is sagging by gravity and threatens to drop out of the plates 21, 22. The "sagged" weld shown in Fig. 2C is already weaker than the weld shown in Fig. 2B and is therefore undesirable. Moreover, if the liquid metal actually leaked out of the weld, a hole would be formed in the structure, which is of course quite unacceptable. It is therefore important to control the welding process in such a manner that the situation shown in Fig. 2C is prevented. Within the scope of the present invention, this situation is designated by the term "excessive penetration".

It will be clear that it is not difficult to optically view the "sagging" weld shown in Fig. 2C from the welding arc side, but once this situation occurs during welding, its restoration, at least at the place in question, is no longer possible owing to a change in the welding parameters. This of course applies to a higher degree if the heat supply increases so much that a hole is burned in the structure. Nor is it difficult to optically establish that the situation shown in Fig. 2C does not occur, but it is difficult to distinguish between the situations of Figs. 2A and 2B.

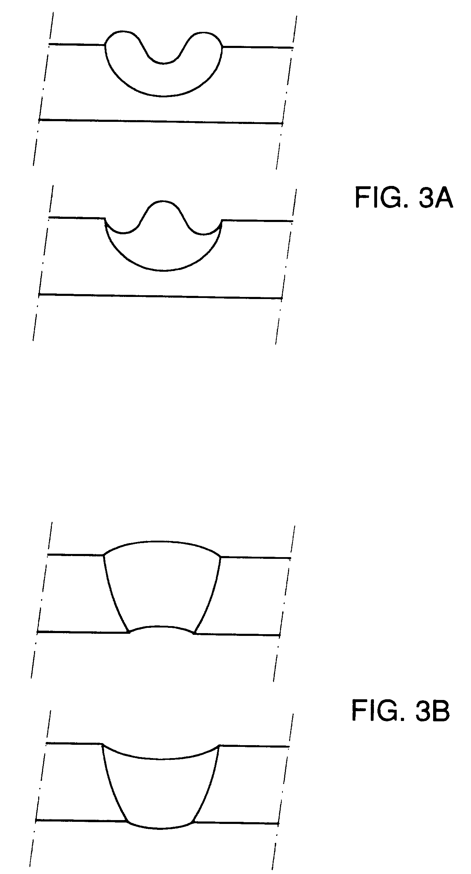

According to the invention the distinction between the situations of Figs. 2A and 2B can be made on the basis of the frequency of oscillation of the weld pool, since in the situations of Figs. 2A and 2B the weld pool behaves differently with respect to oscillations. This is illustrated in Figs. 3A-B.

Fig. 3A shows the extreme positions of the weld pool in an oscillation mode in case of partial penetration. It can be shown that the frequency of oscillation $f_p$ (Hz) may then be expressed by the equation

$$f_p = 5.84 \sqrt{\frac{\gamma}{\rho_l}} \, D_p^{-3/2} \qquad (1)$$

Fig. 3B shows the extreme positions of the weld pool in an oscillation mode in case of complete penetration. It can be shown that the frequency of oscillation $f_f$ (Hz) may then be expressed by the equation

$$f_f = 1.08 \sqrt{\frac{\gamma}{H\rho_s}} \, D_f^{-1} \qquad (2)$$

In the above formulas:

$\gamma$         is the surface tension of the liquid metal (N/m);

$\rho_l$         is the density of the liquid metal (kg/m$^3$);

$\rho_s$         is the density of the solid metal (kg/m$^3$);

H       is the plate thickness (m);

$D_p, D_f$    is the equivalent diameter of the weld pool (m).

In the case of partial penetration $D_p$ is defined as the diameter of a circle the surface of which is equal to the surface of the weld pool. In the case of complete penetration $D_f$ is defined as the diameter of a cylinder the content of which is equal to the content of the weld pool.

When the values of the above quantities, as they will occur unter practical conditions, are filled in in formulas (1) and (2), it appears that $f_p$ is always above 100 Hz, while $f_f$ is generally even below 50 Hz.

This will be illustrated by means of a practical example of a weld in structural steel; for this material the following applies:

$$\gamma \approx 1.0 \text{ N/m};$$
$$\rho_l \approx 7.0 \cdot 10^3 \text{ kg/m}^3;$$
$$\rho_s \approx 7.5 \cdot 10^3 \text{ kg/m}^3;$$

At a plate thickness of $H \approx 4$ mm a heat input of about 6 kJ per cm weld length is typically applied, which can be obtained at

an arc voltage $V \approx 15$ V,
a current strength $I \approx 80$ A (effective), and
a forward velocity $v \approx 1.2$ mm/s.

It should be considered in this regard that the process efficiency $\eta$ is about equal to 60%.

If the heat input is chosen relatively low so as to obtain partial penetration, it appears that $D_p$ is about equal to 5.8 mm; from formula (1) it then follows that $f_p \approx 155$ Hz. If, however, the heat input is chosen relatively high so as to obtain complete penetration, it appears that $D_f$ is about equal to 5.3 mm; from formula (2) it then follows that $f_f \approx 37$ Hz.

According to the invention the weld pool, due to the arc pressure variations resulting from the stepped current variations, is brought into oscillation in the modes as illustrated in Fig. 3, and it is possible to measure the frequency of oscillation of the weld pool without directly observing the weld pool itself. As a result of the oscillation of the weld pool, the welding arc length effectively varies at the same frequency. If the power source is arranged as electric source, so that the welding current remains substantially constant in case of arc length variations, welding arc length variations cause arc voltage variations. If the power source is arranged as voltage source, so that the arc voltage remains substantially constant in case of arc length variations, welding arc length variations cause welding current variations. These current and voltage variations can be measured in a relatively simple manner.

Preferably, the power source is arranged as electric source, and the voltage variations are detected.

As illustrated in Fig. 1, a first input terminal 31 of an arc voltage sensor 30 is suitably connected to the first output terminal 11 of the power source 10, and a second input terminal 32 of the arc voltage sensor 30 is connected to the second output terminal 12 of the power source 10. Preferably, the sensor 30 comprises a low-pass filter 33 having a cut-off frequency of, e.g., about 250 Hz, so as to eliminate the influence of high frequency noise from the power source 10. An output 34 of the sensor 30 is coupled to a data processor 40, preferably a data acquisition system on the basis of a computer, which may suitably be provided at its input with an A/D converter 41. Since the data acquisition system used therefor is known per se and standard available and knowledge of its operation is not necessary for a proper understanding of the present invention, the data processor 40 will not be described in more detail.

It is also possible that the output signals of the sensor 30 are first recorded as an intermediate step on a carrier, such as a magnetic tape, and that at a later stage of analysis the recorded signals are read from the carrier and supplied to the data processor 40.

The data processor 40 can process the stream of entering voltage signals directly, i.e. in real time, but it can also store the entering voltage signals in a memory 42 for later and/or delayed processing.

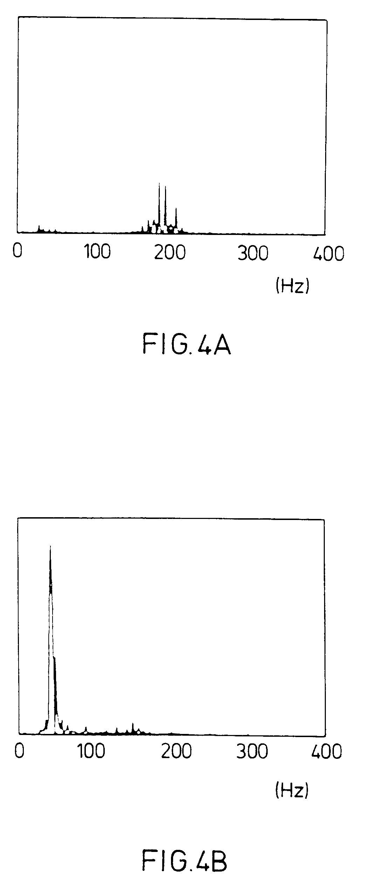

In a first embodiment of the invention, the data processor 40 is only used to display frequency information on a display device 43, such as a viewing screen, for an inspector. An example of such a diagrammatic representation of frequency information is the frequency characteristic, shown in Figs. 4A and 4B, of the voltage signals as obtained by means of the arrangement, shown in Fig. 1, in the situations of Fig. 2A and Fig. 2B, respectively. The diagrams of Figs. 4A and 4B horizontally show the frequency in Hz and vertically show the relative contribution of the frequency components in arbitrary units. This frequency characteristic is obtained by arranging the data processor 40 to implement a Fourier transform and represents the welding current which occurred at a test weld with the following parameters:

current strength 60 A;
trigger pulses 300 A, 6 ms broad, repetition frequency 5 Hz;
arc voltage 15 V;
protective gas: helium
forward velocity 1.2 mm/s
weld depth attained d = 4 mm
plate material: steel Fe360
thickness H = 4 mm (complete) or 6 mm (partial).

When the diagrams of Figs. 4A and 4B are compared with each other, some clear and essential differences are noticeable.

In the first place, in the case of partial penetration the frequency components are almost exclusively in the range of 150-220 Hz, with peak values near 200 Hz, while in case of complete penetration the frequency components are almost exclusively in the range of 30-80 Hz, with a sharp peak near 50 Hz. This fully corresponds to the above formulas (1) and (2).

In the second place, in the case of complete penetration the height of the highest peak is substantially higher than the height of the highest peak in the case of partial penetration. This can be explained by the fact that in the case of complete penetration all points of the weld pool surface move in phase with each other, so that effectively more influence is exerted on the arc length than in the case of partial penetration.

It will be clear from the foregoing that it is quite possible to discriminate between partial and complete penetrations on the basis of the frequency information in the arc voltage. As far as purposes of analysis are concerned, it is therefore possible to establish whether a weld made satisfies the requirements as to penetration: in fact, if throughout the duration of the welding process the recording of the arc voltage shows a frequency information corresponding to complete penetration (Fig. 4B), the weld can be accepted. It is difficult, however, to control the welding process on the basis of this information only, i.e. to take corrective measures during welding in the case of deviations being found with respect to complete penetration. This is in particular the case with roboted welding in which it is hardly, if at all, possible to move the welding torch a little backward so as to restore partial penetration to complete penetration.

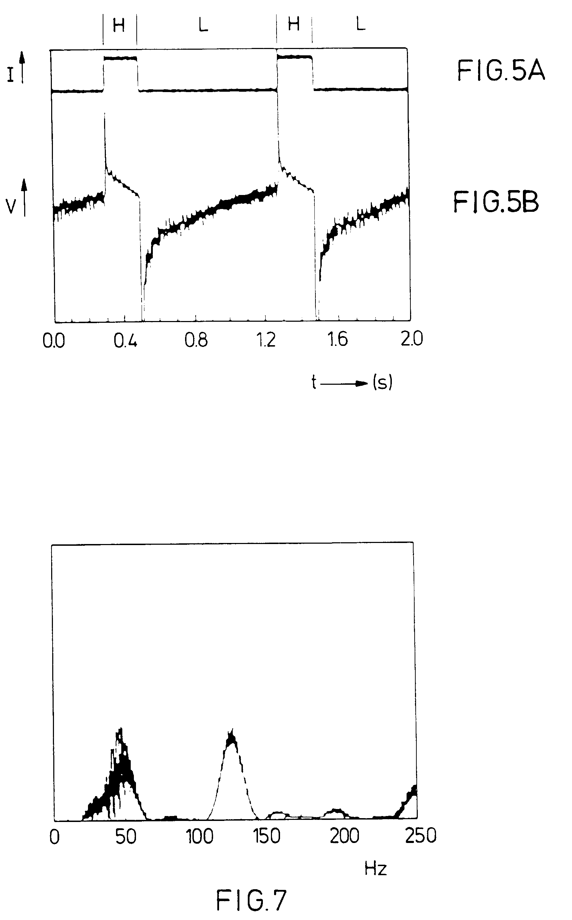

In a welding method according to the invention, welding is therefore performed with pulsating current. The principle of pulsation welding is illustrated in Fig. 5, which figure shows the recording of current I (Fig. 5A) and voltage V (Fig. 5B) in an example of the welding method according to the invention applied to a steel plate 4 mm in thickness at a forward velocity of 0.5 mm/s. During a first part (H) of the welding cycle the current is relatively high, also referred to hereinbelow as pulsed current $I_H$; consequently, the arc voltage is relatively high as well. During a second part (L) of the welding cycle the current is relatively low, also referred to hereinbelow as base current $I_L$; consequently, the arc voltage is relatively low as well. In the given example, the period of time $t_H$ of the first part of the cycle, also referred to hereinbelow as pulse duration, is about 200 ms, and the period of time $t_L$ of the second part of the cycle, also referred to hereinbelow as base duration, is about 800 ms. In this example, the pulsed current $I_H$ is 160 A, the base current $I_L$ 28 A.

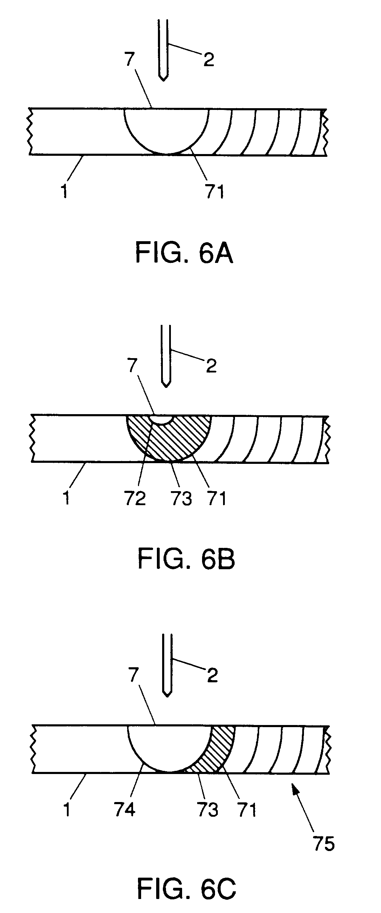

These conditions are so selected that the base current is insufficient to maintain a weld pool, while the pulsed current is more than sufficient to maintain a weld pool. This has the result that during the first part of the cycle, also referred to hereinbelow as melting phase, the melting bath 7 grows, the pulse duration $t_H$ being so selected that at least complete welding through is obtained. This is illustrated in Fig. 6A, in which the maximum extent of the weld pool 7, as it occurs at the end of the melting phase, is designated by reference numeral 71.

During the second part of the cycle, also referred to hereinbelow as solidification phase, the weld pool 7 shrinks to a size d which is less than H, i.e. incomplete welding through. In this case, however, there is no question of the above drawbacks of incomplete welding, since the material underneath the still liquid material has been liquid but has now solidified, so that the slit 28 is absent. This is illustrated in Fig. 6B, in which the minimum size of the weld pool 7, as it occurs at the end of the solidification phase, is designated by reference numeral 72, and the just solidified material 73 is hatched.

In a next melting phase the weld pool 7 grows again to complete welding through, as designated by reference numeral 74 in Fig. 6C. It is clearly indicated in this figure that the welding electrode 2 has meanwhile moved relative to the plate 1, or conversely, so that the place where complete welding through 74 is obtained, has moved relative to the preceding welding through 71 as well.

The final result of the repetition of the above cycle is that the weld considered as a whole has a continuous character of sufficient depth, although a repeated solidification pattern 75 can be recognized therein, which, however, has no detrimental effect on the weld quality.

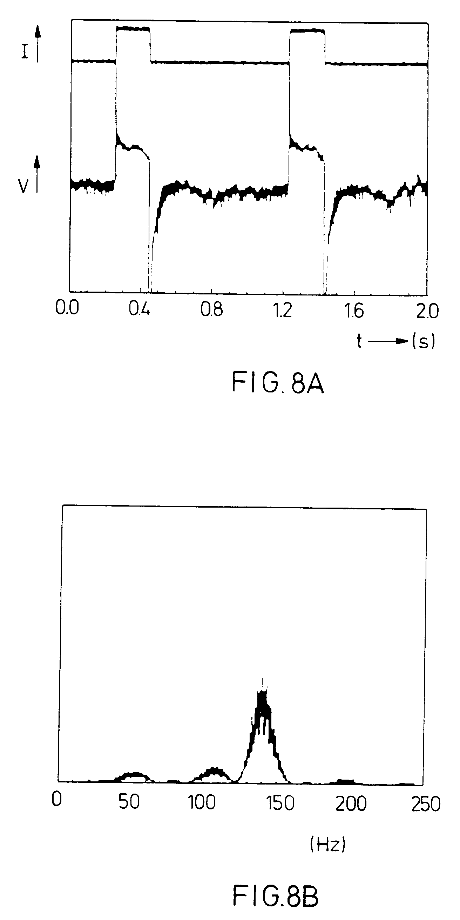

It has been found, as clearly shown in Fig. 5B, that the transitions from $I_H$ to $I_L$, and vice versa, are capable of bringing the weld pool surface into oscillation, without separate excitation pulses being required therefor. If the welding parameters are correctly adjusted, the weld pool, during each melting phase, will therefore be in the situation of complete welding through illustrated in Figs. 2B and 3B, in which the frequency spectrum of the arc voltage will be as shown in Fig. 4B, while during each solidification phase the weld pool will be in the situation of partial penetration illustrated in Figs. 2A and 3A, in which the frequency spectrum of the arc voltage will be as shown in Fig. 4A. The resulting frequency spectrum relating to an integration time which is large relative to the current cycle is shown in Fig. 7. Two separate peaks can be clearly distinguished therein: a first peak at about 50 Hz relating to the melting phase, and a second peak at about 125 Hz relating to the solidification phase.

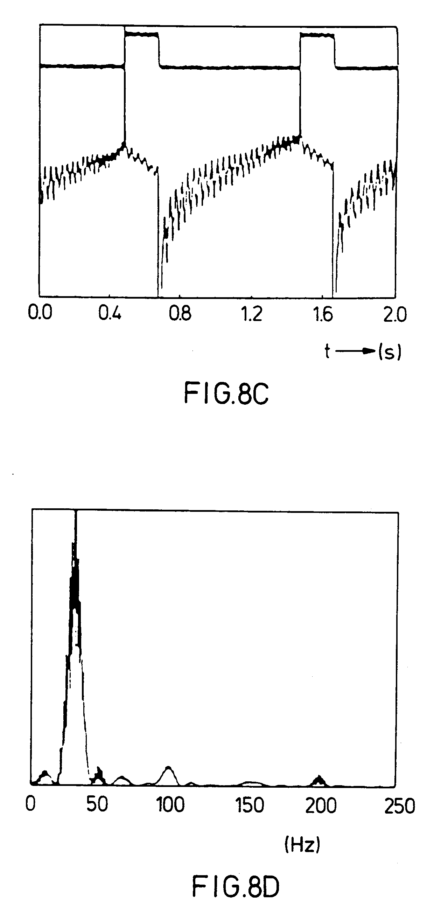

According to the invention the frequency spectrum shown in Fig. 7 with two peaks is characteristic of a good weld, at least a weld having a good penetration. A weld showing incorrect penetration is distinguished by the occurrence of only one peak in the frequency spectrum, as illustrated in Fig. 8. Fig. 8A shows the current and voltage curves in case during the pulse duration of the current cycle only partial penetration occurs; Fig. 8B shows the associate frequency spectrum, in which the fact that the frequency spectrum substantially only has components in the frequency range above 100 Hz, usually in the form of only one essential peak, is characteristic of this situation. Fig. 8C shows the voltage and current curves in case even during the base duration of the current cycle complete penetration occurs; Fig. 8D shows the associate frequency spectrum, in which the fact that the frequency spectrum substantially only has components in the frequency range below 100 Hz, usually in the form of only one essential peak, is characteristic of this situation. In this situation there is an enormous risk of a sagging weld or even melting through.

The data of Fig. 8 have been obtained from the same test weld as that of Fig. 5, with the understanding that the data of Figs. 8A-B were obtained at the beginning of the welding process when the plate 1 was still cold, while the data of Figs. 8C-D were obtained when the plate 1 had been considerably heated after some time. The data of Fig. 5 were obtained in an intermediate time phase.

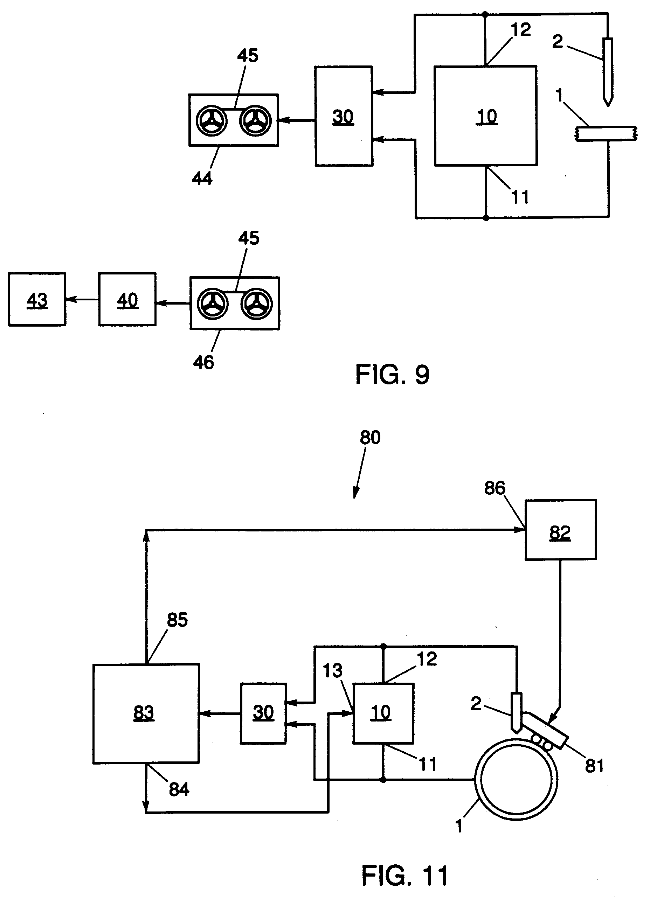

Fig. 9 illustrates a first embodiment of a welding process according to the invention, in which the same or comparable parts as in Fig. 1 are designated by the same reference numerals. Welding takes place by means of a power source 10 arranged to supply a pulsation welding current. In this case the manufacture of a weld can be fully trusted to a welder (or welding robot), but during welding a signal representing the arc voltage is measured by means of the sensor 30 and is recorded by means of a recorder 44 on a magnetic tape 45.

Fig. 9 further illustrates a method of analyzing the welds made. When the weld is ready, the magnetic tape 45 is read by means of a reader 46, and the signals read are input to a data processor 40. The data processor 40 is arranged, by way of example, to carry out a Fourier transform on the signals received and to display the frequency spectrum of the arc voltage signals on a display 43. An inspector evaluates the frequency spectrum displayed, and on the basis of the degree of welding through determined by means of the frequency characteristic, i.e. the occurrence or non-occurrence of two peaks in the frequency spectrum the inspector accepts or rejects the weld made.

An advantage of recording the arc voltage signals is that these signals can be stored for a longer period of time so as to enable, e.g., supervision of the inspector or reexamination of the weld.

It is observed that the recorder 44 and the reader 46 can be integrated into a recorder/reader.

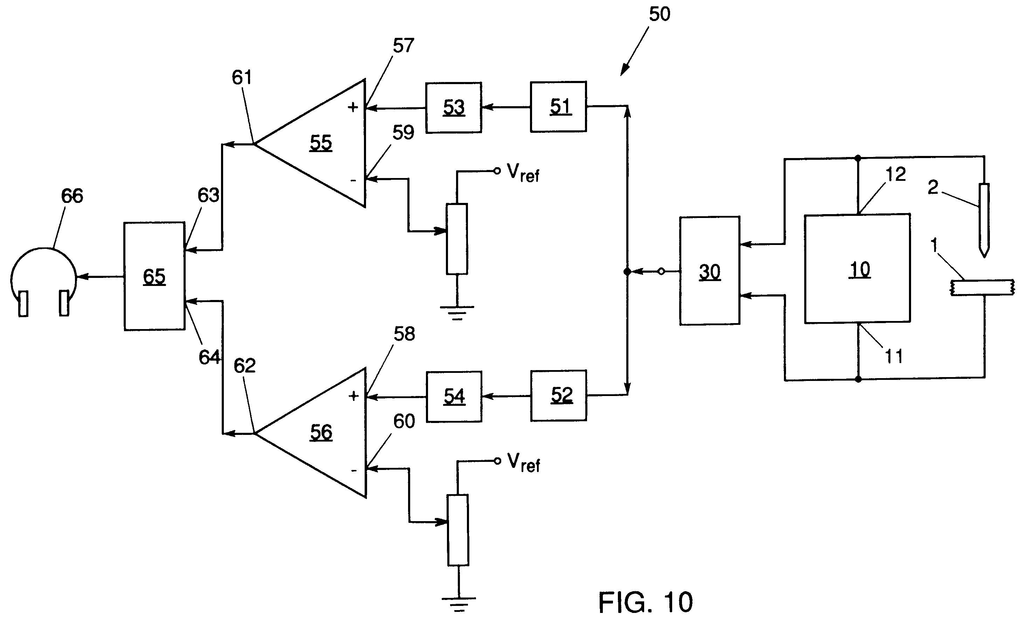

Fig. 10 illustrates a second embodiment of the method and device according to the invention intended to be used in manual welding, in which during the welding process the welder is provided with a signal relative to the degree of welding through. The output signals of the sensor 30 are presented in a simple data processor 50 to two band-pass filters 51 and 52, the first band-pass filter 51 having a pass band of about 100-250 Hz, and the second band-pass filter 52 having a pass band of about 20-100 Hz. It will be clear that instead of the first band-pass filter 51 a high-pass filter having a turnover frequency at 100 Hz may be used as well if the sensor 30, as observed above, is provided with a low-pass filter 33 having a turnover frequency of about 250 Hz. It is further possible that the sensor 30 is an integrated part of the data processor 50.

The output signals of the filters 51, 52 are presented to rectifiers 53, 54, respectively. The rectifiers 53, 54 thus provide an output signal the voltage level of which is representative of the presence of arc voltage variations having frequencies in the range of 100-250 Hz and 20-100Hz, respectively. These DC signals can be evaluated by a computer, but in the simple structural variant shown in Fig. 10 the output signals of the rectifiers 53, 54 are presented to first inputs 57, 58 of comparators 55, 56, respectively. The comparators 55, 56 have two inputs 59, 60, to which adjustable reference voltages or threshold voltages are presented. Each comparator 55, 56 provides at its output 61, 62 a high signal when the voltage received at the first input 57, 58 is higher than the threshold voltage and a low signal when the voltage received at the first input 57, 58 is lower than the threshold voltage.

The outputs 61, 62 of the comparators 55, 56 are coupled to control inputs 63, 64 of a sound signal generator 65 which is arranged to give the welder, by means of a headphone 66, three different sound signals:

a first sound signal, e.g. a signal having a relatively low frequency when at the first control input a high signal and at the second control input a low signal is received, as a sign that the penetration is incomplete;
a second sound signal, e.g. a signal having a relatively high frequency when at the first control input a low signal and at the second control input a high signal is received, as a sign that the penetration is excessive;
a third sound signal, e.g. a signal having an alternating frequency and a relatively low sound intensity when at both the first control input and the second control input a high signal is received, as a sign that the penetration is just sufficient.

It will be clear that the nature of the three different sound signals is not relevant and may be adjusted, if desired, by the welder at this own discretion.

The embodiment shown in Fig. 10 provides the welder, in a very simple manner, with information about the degree of welding through, and on the basis of the information received the welder, using his own craftsmanship, can suitably change the welding parameters to arrive at an optimum weld.

It is observed that instead of filtering the entering signals the processor could also be arranged to subject these signals to a Fourier transform.

It is further observed that the voltage signals may also be recorded to enable subsequent use of the analysis/control method according to the invention discussed with reference to Fig. 9.

Fig. 11 illustrates a further structural variant of the present invention with which it is possible to automatically produce welds with a proper welding through, which method particularly enables pipes to be automatically welded together. For this reason the automatic welding device 80 illustrated in Fig. 11 is considered to be the most important use of the invention.

The automatic welding device 80 illustrated in Fig. 11 comprises a welding robot 81 which is arranged to move, under control of a control member 82, the welding electrode 2 at a predetermined forward velocity v along a seam to be welded in a workpiece 1, shown in Fig. 11 as being a pipe. In a variant, the welding robot 81 is arranged to move the workpiece 1 along the electrode 2, which may then be kept stationary. Such a welding robot 81 is known per se in practice, and details of its structure and of the mechanism for following the seam to be welded do not form part of the present invention. Since, moreover, those skilled in the art do not require knowledge of these details for a proper understanding of the present invention, the welding robot 81 will not be described herein in more detail. It suffices to observe that, conventionally, the control member 82 is arranged to move the welding robot 81 at a preadjustable forward velocity.

The automatic welding device 80 further comprises a power source 10 which, as already discussed above, is arranged to supply a pulsation welding current and has a first output 11 for coupling to the pipe 1 and a second output 12 for coupling to the welding electrode 2. The power source 10 further has a control input 13 for receiving control signals, as will be explained in more detail.

The automatic welding device 80 further comprises a welding sensor 30 the inputs 31 and 32 of which are coupled to the outputs 11 and 12 of the power source 10 for measuring a signal representing the arc voltage, as already discussed with reference to Fig. 1. An output signal of the sensor 30 is presented to a data processor 83 which also functions as central control unit. The data processor 83 has a first control output 84 coupled to the control input 13 of the power source 10 and a second control output 85 coupled to the control input 86 of the control member 82. It is observed that the data processor 83 and the control member 82 may form one whole, in which case the second control output 85 and the control input 86 are omitted.

The data processor 83 is arranged to continuously monitor the degree of welding through of the weld made, on the basis of the frequency characteristic of the signals received from the sensor 30. For this purpose the data processor 83 may be arranged, e.g., to filter the signals received from the sensor 30 in a manner as discussed with reference to Fig. 10, or to carry out in real time a Fourier transform on the signals received from the sensor 30. In order to control the welding process, the data processor 83 is arranged to distinguish between the following three situations which may occur:

(1) The situation in which the detected frequency characteristic comprises two different frequency peaks indicative of the occurrence of sufficient welding through during the pulse phase und sufficient solidification during the solidification phase, as discussed with reference to Figs. 5-7. The data processor 83 is arranged not to correct the welding parameters in this case.

(2) The situation in which the detected frequency characteristic comprises only one frequency peak, namely in a frequency range above 100 Hz, indicative of the occurrence of insufficient welding through during the pulse phase, as discussed with reference to Figs. 8A and 8B. The data processor 83 is arranged to change the welding parameters in this case to effect a larger heat input.

(3) The situation in which the detected frequency characteristic comprises only one frequency peak, namely in a frequency range below 100 Hz, indicative of the occurrence of excessive welding through, as discussed with reference to Figs. 8C and 8D. The data processor 83 is arranged to change the welding parameters in this case to effect a reduced heat input.

The change in the heat input may take place in different ways, namely by transmitting suitable control signals to the power source 10 and/or the control member 82, as will be clear to those skilled in the art. By way of example, it is mentioned here that in order to effect a larger heat input the data processor 83 may be arranged to transmit, via its first control output 84, a control signal to the power source 10 to adjust:

a higher base current and/or
a higher pulsed current and/or
a longer pulse duration,
and/or to transmit, via its second control output 85, a control signal to the control member 82 to adjust a lower forward velocity.

It is of course possible that one user prefers another welding parameter change than another user, in which connection the position of the weld and the material of the workpiece may be relevant. Preferably, therefore, the data processor 83 is provided with a selector switch, not shown for simplicity's sake, with which the user can select the welding parameter(s) to be changed.

It is observed that the above situations (2) and (3) are error situations that must be avoided, and that the data processor 83 will aim at always maintaining situation (1). Consequently, the data processor 83 is arranged not only to make corrections when the above situations (2) and (3) occur, but also to make corrections once it is detected that one of those situations threatens to develop. Such a development can be detected, e.g., as the reduction of the relative contribution to one of the two frequency peaks in the situation (1).

It is further observed that the above-mentioned limit of 100 Hz is a limit observed under practical conditions for different welding materials. It is not deemed impossible, however, that in a given specific case the above limit is at another frequency. The fact, however, will then always be that the occurrence of excessive welding through is characterized by the occurrence of weld pool oscillations at frequencies only in a first relatively low frequency range, and that the occurrence of insufficient welding through is characterized by the occurrence of weld pool oscillations at frequencies only in a second relatively high frequency range, the second frequency range being properly distinguishable from the first frequency range, usually by a factor of 2. It will be clear to those skilled in the art that it is possible to determine the actually occurring frequency ranges by way of experiment and to input a suitable limit frequency to the data processor 83.

Preferably, however, the data processor 83 is self-learning, i.e. arranged to determine in a learning mode, by means of test welding on a workpiece, the frequency characteristic of weld pool oscillations at the time of insufficient welding through and to store it in a memory, and further to determine the frequency characteristic of weld pool oscillations at the time of excessive welding through and to store it in a memory. In an operation mode the data processor 83 may then compare the frequency characteristic of the signals received from the sensor 30 with the frequency characteristics stored in the memory.

It will be clear to those skilled in the art that it is possible to change or modify the given embodiment of the device according to the invention, without departing from he inventive concept or the scope of protection. Thus, for instance, it is possible that the invention is used in pulsating plasma welding. It is also possible, if desired, e.g. when the damping of the oscillations is relatively strong, to support the oscillations during the base current phase and/or during the pulsed current phase by superposing trigger pulses on the welding current.

## Claims

1. A welding method, comprising partly melting a workpiece by means of an electric arc, measuring a signal representing the arc voltage during welding, storing the measured signal in a memory or recording it on a carrier and checking the weld by analysing said signal, characterized by obtaining a weld via pulsation welding.

2. A welding method, comprising partly melting a workpiece by means of an electric arc, measuring a signal representing the arc voltage during welding, checking welding by analysing said signal and generating, on the basis of the form of the frequency spectrum of said signal, a signal indicative of the degree of welding through, characterized by performing pulsation welding.

3. A welding method according to claim 2, characterized in that the generated signal is a sound signal.

4. A welding method according to claim 2 or 3, characterized in that the measured signal is also stored in a memory or recorded on a carrier.

5. A method of analyzing welds made by means of a pulsation welding process according to claim 1 or 4, characterized in that the measuring signal representing the arc voltage, which is stored in said memory or recorded on said carrier, is read out of said memory or said carrier and is analyzed with respect to the frequency spectrum thereof.

6. A method of analysis according to claim 5, characterized in that at least a portion of a weld to be tested is rejected if the frequency spectrum has only one relevant peak and is accepted if the frequency spectrum comprises two relevant peaks.

7. A method of analysis according to claim 6, characterized in that the two relevant peaks in the frequency spectrum are on both sides of 100 Hz.

8. A welding method, comprising partly melting a workpiece by means of an electric arc, measuring a signal representing the arc voltage during welding, analyzing said signal in real time with respect to the frequency spectrum, and controlling the welding process on the basis thereof, characterized by obtaining a weld via pulsation welding.

9. A welding method according to claim 8, characterized in that, if the frequency spectrum has only one relevant peak at a relatively low frequency range, the heat input of the welding process is reduced, and wherein, if the frequency spectrum has only one relevant peak at a relatively high frequency range, the heat input of the welding process is increased.

10. A welding method according to claim 9, characterized in that change in the heat input is effected by changing the forward velocity and/or changing the base current and/or by changing the pulsed current and/or by changing the pulse duration.

11. A device for making welds, comprising: a power source (10) with a first output terminal (11) for connection to a workpiece (1) to be welded and a second output terminal (12) for connection to a welding electrode (2), characterized in that the power source (10) is arranged to supply a pulsation welding current and in that the device further comprises an arc voltage sensor (30) with a first input terminal (31) intended to be connected to the first output terminal (11) of the power source (10), and a second input terminal (32) intended to be connected to the second output terminal (12) of the power source (10), and an output terminal (34) for supplying signals indicative of the voltage variations occurring during the welding process as a result of weld pool oscillations.

12. A device according to claim 11, characterized in that the output terminal (34) of the arc voltage sensor (30) is coupled to an input of a magnetic tape recorder (44).

13. A device according to claim 12, characterized in that a magnetic tape reader (46) is provided as well as a data processor (40) for receiving the signals read by the magnetic tape reader (46), the data processor (40) being arranged to carry out a Fourier transform on the signals received, and to display the frequency spectrum of the arc voltage signals on a display (43).

14. A device according to claim 11, characterized in that the output terminal (34) of the arc voltage sensor (30) is coupled to an input of a data processor (50), comprising:

    two band-pass filters (51, 52), the first band-pass filter (51) having a pass band of about 100-250 Hz, and the second band-pass filter (52) having a pass band of about 20-100 Hz; rectifiers (53, 54) coupled to the outputs of the filters (51, 52); first inputs (57, 58) of comparators (55, 56) coupled to the outputs of the rectifiers (53, 54); second inputs (59, 60) of the comparators (55, 56), to which adjustable reference voltages or threshold voltages are presented; and control inputs (63, 64) of a sound signal generator (65) coupled to the outputs (61, 62) of the comparators (55, 56), said generator being arranged to give three different sound signals by means of a headphone (66) in dependence on the conditions of the control inputs (63, 64).

15. An automatic welding device (80), comprising:

a welding robot (81) arranged to move, under control of a control member (82), a welding electrode (2) and a seam to be welded in a workpiece (1), e.g. a pipe, relative to each other at a predetermined forward velocity;

a power source (10), provided with a first output (11) for coupling to the workpiece (1) and a second output (12) for coupling to the welding electrode (2), and further provided with a control input (13) for receiving control signals, characterized in that the power source (10) is arranged to supply a pulsation welding current and in that the automatic welding device further comprises an arc voltage sensor (30) having a first input terminal (30) coupled to the first output terminal (11) of the power source (10), a second input terminal (32) coupled to the second output terminal (12) of the power source (10), and an output terminal (34) for supplying signals indicative of the voltage variations occurring during the welding process as a result of weld pool oscillations;

a data processor (83) coupled to the output terminal (34) of the arc voltage sensor (30);

said data processor (83) having a first control output (84) coupled to the control input (13) of the power source (10), and a second control output (85) coupled to a control input (86) of the control member (82).

16. An automatic welding device according to claim 15, characterized in that the data processor (83) is arranged to carry out a Fourier transform in real time on the signals received from the sensor (30).

17. An automatic welding device according to claim 15, characterized in that the data processor (83) is provided with:

    two band-pass filters (51, 52), the first band-pass filter (51) having a pass band of about 100-250 Hz, and the second band-pass filter (52) having a pass band of about 20-100 Hz; rectifiers (53, 54) coupled to the outputs of the filters (51, 52); and first inputs (57, 58) of comparators (55, 56) coupled to the outputs of the rectifiers (53, 54); adjustable reference voltages or threshold voltages being applied to second inputs (59, 60) of the comparators (55, 56).

18. An automatic welding device according to any of claims 15-17, characterized in that the data processor (83) is arranged to change, by means of suitable control signals at the control output (84) and/or the control output (85), the heat input of the welding process in response to the characteristics of the signals received from the sensor (30).

19. An automatic welding device according to claim 18, characterized in that the data processor (83) is provided with a selector switch which enables the user to select the welding parameter(s) to be changed.

20. An automatic welding device according to any of claims 15-19, characterized in that the data processor (83) is arranged to determine, in a learning mode, the frequency characteristic of weld pool oscillations at the time of insufficient welding through and to store it in a memory, and further to determine the frequency characteristic of weld pool oscillations at the time of excessive welding through and to store it in a memory, and to subsequently compare, in an operation mode, the frequency characteristics of the signals received from the sensor (30) with the frequency characteristics stored in the memory.

21. A device according to any of claims 11-20, characterized in that sensor (30) comprises a low-pass filter (33) having a cut-off frequency of, e.g., about 250 Hz.

22. A device according to an of claims 11-21, characterized in that the power source (10) is arranged to additionally superpose trigger pulses on the welding current during the base current phase and/or during the pulsed current phase.

**Patentansprüche**

1. Schweißverfahren mit den folgenden Schritten: teilweises Schmelzen eines Werkstücks durch einen Lichtbogen, Messen eines Signals, das die Bogen-Spannung während des Schweißens repräsentiert, Speichern des gemessenen Signals in einem Speicher oder Aufzeichnen des Signals auf einem Träger, und Prüfen der Schweißung durch Analysieren des Signals, dadurch gekennzeichnet, daß eine Schweißung durch Pulsationsschweißen hergestellt wird.

2. Schweißverfahren mit den folgenden Schritten: teilweises Schmelzen eines Werkstücks durch einen Lichtbogen, Messen eines Signals, das die Bogen-Spannung während des Schweißens repräsentiert, Prüfen der Schweißung durch Analysieren des Signals und Erzeugen eines den Grad des Durchschweißens angebenden Signals auf der Basis der Form des Frequenzspektrums des Signals, gekennzeichnet durch Durchführen von Pulsationsschweißen.

3. Schweißverfahren nach Anspruch 2, dadurch gekennzeichnet, daß das erzeugte Signal ein Schallsignal ist.

4. Schweißverfahren nach Anspruch 2 oder 3, dadurch gekennzeichnet, daß das gemessene Signal ferner in einem Speicher gespeichert oder auf einem Träger aufgezeichnet wird.

5. Verfahren zum Analysieren von durch einen Pulsationsschweißvorgang nach Anspruch 1 bis 4 erzeugten Schweißungen, dadurch gekennzeichnet, daß das die Bogen-Spannung repräsentierende Meßsignal, das in dem Speicher gespeichert oder auf dem Träger aufgezeichnet ist, aus dem Speicher oder dem Träger ausgelesen wird und auf sein Frequenzspektrum hin analysiert wird.

6. Analyseverfahren nach Anspruch 5, dadurch gekennzeichnet, daß mindestens ein Teil einer zu testenden Schweißung beanstandet wird, falls das Frequenzspektrum nur eine relevante Spitze aufweist, und akzeptiert wird, falls das Frequenzspektrum zwei relevante Spitzen aufweist.

7. Analyseverfahren nach Anspruch 6, dadurch gekennzeichnet, daß die beiden relevanten Spitzen in dem Frequenzspektrum auf beiden Seiten von 100 Hz liegen.

8. Schweißverfahren mit den folgenden Schritten: teilweises Schmelzen eines Werkstücks durch einen Lichtbogen, Messen eines Signals, das die Bogen-Spannung während des Schweißens repräsentiert, in Echtzeit durchgeführtes Analysieren des Signals auf sein Frequenzspektrum hin, und Steuern des Schweißvorgangs auf der Basis des Frequenzspektrums, dadurch gekennzeichnet, daß eine Schweißung durch Pulsationsschweißen hergestellt wird.

9. Schweißverfahren nach Anspruch 8, dadurch gekennzeichnet, daß, falls das Frequenzspektrum nur eine relevante Spitze in einem relativ niedrigen Frequenzbereich aufweist, der Wärmeeintrag des Schweißvorgangs reduziert wird, und daß, falls das Frequenzspektrum nur eine relevante Spitze in einem relativ hohen Frequenzbereich aufweist, der Wärmeeintrag des Schweißvorgangs erhöht wird.

10. Schweißverfahren nach Anspruch 9, dadurch gekennzeichnet, daß die Änderung des Wärmeeintrags durch Verändern der Vorwärtsgeschwindigkeit und/oder durch Verändern des Basisstroms und/oder durch Verändern des gepulsten Stroms und/oder durch Verändern der Impulslänge durchgeführt wird.

11. Vorrichtung zum Erzeugen von Schweißungen, mit einer Stromquelle (10) mit einem ersten Ausgangsanschluß (11) zur Verbindung mit einem zu schweißenden Werkstück (1) und einem zweiten Ausgangsanschluß (12) zur Verbindung mit einer Schweißelektrode (2), dadurch gekennzeichnet, daß die Stromquelle (10) zum Zuführen eines Pulsationsschweißstroms ausgebildet ist und daß die Vorrichtung ferner aufweist: einen Bogenspannungssensor (30) mit einem ersten Eingangsanschluß (31) zur Verbindung mit dem ersten Ausgangsanschluß (11) der Stromquelle (10), und einem zweiten Eingangsanschluß (32) zur Verbindung mit dem zweiten Ausgangsanschluß (12) der Stromquelle (10), und einen Ausgangsanschluß (34) zum Ausgeben von Signalen, die die während des Schweißvorgangs infolge von Schweißbad-Oszillationen auftretenden Spannungsveränderungen angeben.

12. Vorrichtung nach Anspruch 11, dadurch gekennzeichnet, daß der Ausgangsanschluß (34) des Bogenspannungssensors (30) mit einen Eingang eines Magnetbandrecorders (44) verbunden ist.

13. Vorrichtung nach Anspruch 12, dadurch gekennzeichnet, daß ein Magnetbandleser (46) sowie ein Datenprozessor (40) zum Empfang der durch den Magnetbandleser (46) gelesenen Signale vorgesehen sind, wobei der Datenprozessor (40) derart ausgebildet ist, daß er eine Fourier-Transformation der empfangenen Signale ausführt und das Frequenzspektrum der Bogenspannungssignale auf einer Anzeigevorrichtung (43) anzeigt.

14. Vorrichtung nach Anspruch 11, dadurch gekennzeichnet, daß der Ausgangsanschluß (34) des Bogenspannungssensors (30) mit einem Eingang eines Datenprozessors (50) verbunden ist, mit:

zwei Bandpaßfiltern (51,52), wobei das erste Bandpaßfilter (51) ein Durchlaßband von ungefähr 100-250 Hz hat und das zweite Bandpaßfilter (52) ein Durchlaßband von ungefähr 20-100 Hz hat;

Gleichrichtern (53,54), die mit den Ausgängen der Filter (51,52) verbunden sind;

ersten Eingängen (57,58) von Komparatoren (55,56), die mit den Ausgängen der Gleichrichter (53,54) verbunden sind;

zweiten Eingängen (59,60) der Komparatoren (55,56), an die einstellbare Referenzspannungen oder Schwellenspannungen angelegt werden; und

Steuereingängen (63,64) eines Tonsignalgenerators (65), die mit den Ausgängen (61,62) der Komparatoren (55,56) verbunden sind, wobei der Generator derart ausgebildet ist, daß er in Abhängigkeit von den Zuständen der Steuereingänge (63,64) drei unterschiedliche Tonsignale über einen Kopfhörer (66) ausgibt.

15. Automatische Schweißvorrichtung (80) mit:

einem Schweißroboter (81), der so ausgebildet ist, daß er unter Steuerung durch ein Steuerteil (82) eine Schweißelektrode (2) und eine an einem Werkstück (1) wie z.B. einem Rohr zu schweißende Naht mit einer vorbestimmten Vorwärtsgeschwindigkeit relativ zueinander bewegt;

einer Stromquelle (10) mit einem ersten Ausgang (11) zur Verbindung mit einem Werkstück (1) und einem zweiten Ausgang (12) zur Verbindung mit der Schweißelektrode (2), und ferner mit einem Steuereingang (13) zum Empfangen von Steuersignalen,
dadurch gekennzeichnet, daß die Stromquelle (10) zur Ausgabe eines Pulsations-Schweißstroms ausgebildet ist und daß die automatische Schweißvorrichtung ferner einen Bogenspannungssensor (30) aufweist, der einen ersten Eingangsanschluß (31), welcher mit dem ersten Ausgangsanschluß (11) der Stromquelle (10) verbunden ist, einen zweiten Eingangsanschluß (32), welcher mit dem zweiten Ausgangsanschluß (12) der Stromquelle (10) verbunden ist, und einen Ausgangsanschluß (34) zum Ausgeben von Signalen aufweist, die die während des Schweißvorgangs infolge von Schweißbad-Oszillationen auftretenden Spannungsveränderungen angeben;
wobei ein Datenprozessor (83) mit dem Ausgangsanschluß (34) des Bogenspannungssensors (30) verbunden ist;
wobei der Datenprozessor (83) einen ersten Steuereingang (84), der mit dem Steuereingang (13) der Stromquelle (10) verbunden ist, und einen zweiten Steuereingang (85) aufweist, der mit dem Steuereingang (86) des Steuerteils (82) verbunden ist.

16. Automatische Schweißvorrichtung nach Anspruch 15, dadurch gekennzeichnet, daß der Datenprozessor (83) derart ausgebildet ist, daß er in Echtzeit eine Fourier-Transformation der von dem Sensor (30) her empfangenen Signale ausführt.

17. Automatische Schweißvorrichtung nach Anspruch 15, dadurch gekennzeichnet, daß der Datenprozessor (83) versehen ist mit:

zwei Bandpaßfiltern (51,52), wobei das erste Bandpaßfilter (51) ein Durchlaßband von ungefähr 100-250 Hz hat und das zweite Bandpaßfilter (52) ein Durchlaßband von ungefähr 20-100 Hz hat;

Gleichrichtern (53,54), die mit den Ausgängen der Filter (51,52) verbunden sind;

ersten Eingängen (57,58) von Komparatoren (55,56), die mit den Ausgängen der Gleichrichter (53,54) verbunden sind;
wobei einstellbare Referenzspannungen oder Schwellenspannungen an zweite Eingänge (59,60) der Komparatoren (55,56) angelegt werden.

18. Automatische Schweißvorrichtung nach einem der Ansprüche 15-17, dadurch gekennzeichnet, daß der Datenprozessor (83) derart ausgebildet ist, daß er als Reaktion auf die Eigenschaften der von dem Sensor (30) her empfangenen Signale mittels geeigneter Steuersignale an dem Steuerausgang (84) und/oder dem Steuerausgang (85) den Wärmeeintrag des Schweißvorgangs verändert.

19. Automatische Schweißvorrichtung nach Anspruch 18, dadurch gekennzeichnet, daß der Datenprozessor (83) mit einem Selektorschalter versehen ist, mit dem der Benutzer den bzw. die zu verändernden Schweißparameter wählen kann.

20. Automatische Schweißvorrichtung nach einem der Ansprüche 15 bis 19, dadurch gekennzeichnet, daß der Datenprozessor (83) derart ausgebildet ist, daß er in einer Lern-Betriebsart die Frequenzcharakteristik von Schweißbad-Oszillationen zum Zeitpunkt eines unzureichenden Durchschweißens bestimmt und diese in einem Speicher speichert, und ferner die Frequenzcharakteristik von Schweißbad-Oszillationen zum Zeitpunkt eines übermäßigen Durchschweißens bestimmt und diese in einem Speicher speichert, und anschließend in einer Arbeits-Betriebsart die Frequenzcharakteristik der von dem Sensor (30) her empfangenen Signale mit der in dem Speicher gespeicherten Frequenzcharakteristik vergleicht.

21. Vorrichtung nach einem der Ansprüche 11-20, dadurch gekennzeichnet, daß der Sensor (30) ein Tiefpaßfilter (33) mit einer Grenzfrequenz von z.B. ungefähr 250 Hz aufweist.

22. Vorrichtung nach einem der Ansprüche 11-21, dadurch gekennzeichnet, daß die Stromquelle (10) derart ausgebildet ist, daß sie während der Basisstrom-Phase und/oder während der Phase des gepulsten Stroms dem Schweißstrom zusätzlich Trigger-Impulse überlegt.

## Revendications

1. Procédé de soudage comprenant la fusion partielle d'une pièce à l'aide d'un arc électrique, la mesure d'un signal représentant la tension de l'arc pendant le soudage, la mémorisation du signal mesuré dans une mémoire ou son enregistrement sur un support, et la vérification de la soudure par analyse du signal, caractérisé par l'obtention d'une soudure par soudage par pulsations.

2. Procédé de soudage, comprenant la fusion partielle d'une pièce par un arc électrique, la mesure d'un signal représentant la tension de l'arc au cours du soudage, la vérification du soudage par analyse du signal, et la création, d'après la forme du spectre de fréquence du signal, d'un signal représentatif du degré de pénétration de soudage, caractérisé par l'exécution d'un soudage par pulsations.

3. Procédé de soudage selon la revendication 2, caractérisé en ce que le signal créé est un signal acoustique.

4. Procédé de soudage selon la revendication 2 ou 3, caractérisé en ce que le signal mesuré est aussi conservé dans une mémoire ou enregistré sur un support.

5. Procédé d'analyse de soudures formé par mise en oeuvre d'un procédé de soudage par pulsations selon la revendication 1 ou 4, caractérisé en ce que le signal de mesure, qui représente la tension de l'arc et qui est conservé dans la mémoire ou enregistré sur le support, est lu dans la mémoire ou sur le support et est analysé pour la détermination de son spectre de fréquence.

6. Procédé d'analyse selon la revendication 5, caractérisé en ce qu'une partie au moins d'une soudure à tester est rejetée lorsque le spectre de fréquence n'a qu'un seul pic correspondant, et est acceptée lorsque le spectre de fréquence comprend deux pics correspondants.

7. Procédé d'analyse selon la revendication 6, caractérisé en ce que les deux pics correspondants du spectre de fréquence se trouvent de part et d'autre de 100 Hz.

8. Procédé de soudage, comprenant la fusion partielle d'une pièce par un arc électrique, la mesure d'un signal représentant la tension de l'arc pendant le soudage, l'analyse du signal en temps réel par détermination de son spectre de fréquence, et la commande du processus de soudage en fonction de ce signal, caractérisé par l'obtention d'une soudure par soudage par pulsations.

**9.** Procédé de soudage selon la revendication 8, caractérisé en ce que, si le spectre de fréquence n'a qu'un seul pic correspondant dans une plage de fréquences relativement basses, la quantité de chaleur transmise à l'opération de soudage est réduite, et dans lequel, lorsque le spectre de fréquence n'a qu'un seul pic correspondant dans une plage de fréquences relativement élevées, la quantité de chaleur du processus de soudage est accrue.

**10.** Procédé de soudage selon la revendication 9, caractérisé en ce que le changement de quantité de chaleur fournie est réalisé par changement de la vitesse d'avance et/ou par changement du courant de base et/ou par changement du courant pulsé et/ou par changement de la durée d'impulsion.

**11.** Dispositif d'exécution de soudures, comprenant :

une alimentation (10) ayant une première borne de sortie (11) destinée à être connectée à une pièce (1) à souder, et une seconde borne de sortie (12) destinée à être connectée à une électrode de soudage (2), caractérisé en ce que l'alimentation (10) est destinée à transmettre un courant de soudage par pulsations, et en ce que le dispositif comporte en outre un capteur (30) de tension d'arc ayant une première borne d'entrée (31) destinée à être connectée a la première borne de sortie (11) de l'alimentation (10), une seconde borne d'entrée (32) destinée à être connectée à la seconde borne de sortie (12) de l'alimentation (10), et une borne de sortie (34) destiné à transmettre les signaux représentatifs des variations de tension qui se produisent pendant l'opération de soudage à la suite des oscillations de la mare de soudage.

**12.** Dispositif selon la revendication 11, caractérisé en ce que la borne de sortie (34) du capteur (30) de tension d'arc est couplée à une entrée d'un appareil (44) d'enregistrement sur bande magnétique.

**13.** Dispositif selon la revendication 12, caractérisé en ce qu'il comporte un lecteur (46) de bande magnétique ainsi qu'un processeur de données (40) destiné à recevoir les signaux lus par le lecteur (46) sur bande magnétique, le processeur de données (40) étant destiné à effectuer une transformation de Fourier sur les signaux reçus, et à afficher le spectre de fréquence des signaux de tension d'arc sur un dispositif d'affichage (43).

**14.** Dispositif selon la revendication 11, caractérisé en ce que la borne de sortie (34) du capteur (30) de tension d'arc est couplée à une entrée d'un processeur de données (50),

comprenant :
deux filtres passe-bande (51, 52), le premier filtre passe-bande (51) ayant une bande passante d'environ 100 à 250 Hz, et le second filtre passe-bande (52) ayant une bande passante d'environ 20 à 100 Hz, des redresseurs (53, 54) couplés aux sorties des filtres (51, 52), des premières entrées (57, 58) des comparateurs (55, 56) couplées aux sorties des redresseurs (53, 54), des secondes entrées (59, 60) des comparateurs (55, 56) auxquelles sont présentées des tensions réglables de référence ou de seuil, et des entrées de commande (63, 64) d'un générateur (65) de signaux acoustiques couplées aux sorties (61, 62) des comparateurs (55, 56), le générateur étant destiné à donner trois signaux acoustiques différents à l'aide d'un casque d'écoute (66) d'après les conditions des entrées de commande (63, 64).

**15.** Dispositif de soudage automatique (80), comprenant :

un robot de soudage (81) destiné à déplacer, sous la commande d'un organe de commande (82), une électrode de soudage (2) et un raccord à souder dans une pièce (1), telle qu'un tube, l'un par rapport à l'autre avec une vitesse prédéterminée d'avance, une alimentation (10) ayant une première sortie (11) destinée à être couplée a la pièce (1) et une seconde sortie (12) destinée à être couplée a l'électrode de soudage (2), et comprenant en outre une unite de commande (13) destinée à recevoir les signaux de commande. caractérisé en ce que l'alimentation (10) est destinée à transmettre un courant de soudage par pulsations, et en ce que le dispositif de soudage automatique comporte en outre un capteur (30) de tension d'arc ayant une premiere borne d'entrée (30) couplée a la première; borne de sortie (11) de l'alimentation (10) une seconde borne d'entrée (32) couplée à la seconde borne de sortie (12) de l'alimentation (10), et une borne de sortie (34) destiné a transmettre des signaux représentatifs des variations de tension qui se produisent pendant l'opération de soudage en fonction d'une oscillation de la mare fondue, un processeur de données (83) couple a la borne de sortie (34) du capteur de tension d'arc (30), le processeur de données (83) ayant une première sortie de commande (84) couplée a l'entrée de commande (13) de l'alimentation (10), et une seconde sortie de commande (85) couplée à une entrée de commande (86) de l'organe de commande (82).

16. Dispositif de soudage automatique selon la revendication 15, caractérise en ce que le processeur de données (83) est destiné a exécuter une transformation de Fourier en temps réel sur les signaux reçus du capteur (30).

17. Dispositif de soudage automatique selon la revendication 15, caractérise en ce que le processeur de données (83) comporte :

deux filtres passe-bande (51, 52) le premier filtre passe-bande (51) ayant une bande passante comprise entre environ 100 et 250 Hz, et le second filtre passe-bande (52) ayant une bande passante d'environ 20 a 100 Hz, des redresseurs (53, 54) couples aux sorties des filtres (51, 52) , et des premières entrées (57, 58) des comparateurs (55, 56) couplées aux sorties des redresseurs (53, 54) des tensions réglables de référence ou de seuil étant appliquées aux secondes entrées (59, 60) des comparateurs (55, 56).

18. Dispositif de soudage automatique selon l'une quelconque des revendications 15 à 17 caractérise en ce que le processeur de données (83) est destiné a changer, à l'aide de signaux convenables de commande a la sortie de commande (84) et/ou a la sortie de commande (85) la quantité de chaleur fournie au processus de soudage en fonction des caractéristiques des signaux reçus du capteur (30) .

19. Dispositif de soudage automatique selon la revendication 18, caractérise en ce que le processeur de données (83) comporte un commutateur selecteur qui permet a l'utilisateur de sélectionner le paramètre ou les paramètres de soudage qui doivent être modifies.

20. Dispositif de soudage automatique selon l'une quelconque des revendications 15 à 19 caractérise en ce que le processeur de données (83) est destine a déterminer, en mode d'apprentissage, la caractéristique de fréquence des oscillations de la mare fondue au monment d'un soudage qui pénètre de manière insuffisante et à la conserver dans une mémoire, et en outre à déterminer la caractéristique de fréquence des oscillations de la mare fondue au moment d'un soudage excessif et à la conserver dans une mémoire, et a comparer ensuite, en mode de fonctionnement les caractéristiques de fréquence des signaux reçus du capteur (30) aux caractéristiques de fréquence conservées dans la mémoire.

21. Dispositif selon l'une quelconque des revendications 11 à 20, caractérise en ce que le capteur (30) comporte un filtre passe-bande (33) ayant une fréquence de coupure qui est par exemple de 250 Hz environ.

22. Dispositif selon l'une des revendications 11 à 21, caractérisé en ce que l'alimentation (10) est destinée à superposer en outre les impulsions de déclenchement au courant de soudage pendant la phase du courant de base et/ou pendant la phase du courant pulsé.

FIG. 1

FIG. 2A

FIG. 2B

FIG. 2C

FIG. 3A

FIG. 3B

FIG.4A

FIG.4B

FIG.5A

FIG.5B

t ──→ (s)

FIG.7

FIG. 6A

FIG. 6B

FIG. 6C

FIG.8A

FIG.8B

FIG.8C

FIG.8D

FIG. 9

FIG. 11

FIG. 10